# EUROPEAN PATENT APPLICATION

(11) **EP 4 328 682 A1**
(43) Date of publication of application: **28.02.2024**
(21) Application number: 21937907.0
(22) Date of filing: 22.04.2021
(51) Int. Cl.: G05B 19/18

(54) **METHOD FOR MACHINING COMPONENT**

(71) Applicant: DMG Mori Co., Ltd., Yamatokoriyama-shi, Nara 639-1160 (JP)
(72) Inventor: KURIYA, Tatsuhiko, Yamatokoriyama-shi, Nara 639-1160 (JP); HIEI, Kento, Yamatokoriyama-shi, Nara 639-1160 (JP); ONO, Masahiro, Yamatokoriyama-shi, Nara 639-1160 (JP)
(74) Representative: Dantz, Jan Henning
(86) International application number: PCT/JP2021/016352
(87) International publication number: WO 2022/224415

(57) **Abstract**

Disclosed is a method for machining a component including: a first processing step of machining a workpiece material into a workpiece in which a needed portion is connected to an unneeded portion via a connecting portion by action of a tool supported by a tool supporting portion on the workpiece material supported by a workpiece material supporting portion in a processing space covered with a cover member; and a second processing step of cutting the connecting portion to separate the needed portion from the unneeded portion by using the tool supported by the tool supporting portion in a state in which a door that divides the processing space is opened for a workpiece material transport mechanism to move into the processing space and at least the needed portion of the workpiece obtained through machining in the first processing step is supported by the workpiece material transport mechanism.

## Description

### [Technical Field]

The present invention relates to a method for machining a component that is applicable to NC machine tools (Numerically Controlled Machine Tools).

### [Background Art]

Patent Literature 1 proposes a processing system that includes: a machine tool control device that controls a machine tool; and a robot control device that controls a robot, wherein a workpiece is transported to the machine tool by using the robot.

To describe it more specifically, the machine tool control device includes a signal output unit that outputs a processing start signal at the start of processing the work-piece. The robot control device includes: an operation command unit that outputs an operation command for the robot to perform a first operation of transporting the work-piece from an initial position to a first position that is adjacent to the machine tool and a second operation of transporting the workpiece that has been transported to the first position to a second position that is located in a processing area of the machine tool; a time prediction unit that predicts, based on the processing start signal output from the signal output unit, a processing completion time at which the machine tool completes processing of the workpiece; a duration prediction unit that predicts a length of time required for the robot to complete the first operation; and a time determination unit that determines, based on the processing completion time predicted by the time prediction unit and the length of time predicted by the duration prediction unit, a start time of the first operation so as to complete the first operation at the processing completion time.

### [Citation List]

### [Patent Literature]

[PTL 1] Laid-Open Patent Publication No. 2015-182173

### [Summary of Invention]

### [Technical Problem]

With the robot described above, by automatically supplying a workpiece material mounted in a workpiece stocker to the machine tool and automatically recovering a component in its final shape obtained as a result of the workpiece material being processed by the machine tool into the workpiece stocker, an improvement in operation efficiency can be expected.

In the case of grinding a workpiece material into a component in its final shape, the workpiece material may be ground into the component in its final shape while leaving a portion of the workpiece material. An example of this case is processing in which a workpiece material is processed such that an outer portion of the workpiece material is formed into a frame, and an inner portion of the workpiece material within the frame is ground into a component in its final shape, with the obtained component being connected to the frame by a plurality of bars that function as a connecting portion. In this case, the component is a needed portion, and the frame is an unneeded portion.

In some cases, the processing described above is desired because, if the frame that is an excess portion is completely eliminated through grinding, not only the processing time may be extended, but also the service life of the tool may be shortened.

However, removing the component from the machine tool, with the component being connected to the frame by the plurality of bars, takes an extra effort to perform post-processing of cutting the bars connecting the component and the frame.

To address the problem described above, when only the component in its final shape, with the frame being supported by a workpiece material supporting portion, is transported from the machine tool and recovered into the workpiece stocker, and thereafter, the frame is transported from the machine tool, another problem arises in that it takes more extra effort, resulting in a reduction in operation efficiency.

Accordingly, it is an object of the present invention to provide a method for machining a component, with which it is possible to improve transport efficiency from a machine tool when a workpiece material is machined into a component in its final shape while leaving an excess portion that is a portion other than the component in its final shape.

### [Solution to Problem]

In order to achieve the object described above, a method for machining a component according to the present invention has a characteristic configuration that includes: a first processing step of machining a workpiece material into a workpiece in which a needed portion is connected to an unneeded portion via a connecting portion by action of a tool supported by a tool supporting portion on the workpiece material supported by a workpiece material supporting portion in a processing space covered with a cover member; and a second processing step of cutting the connecting portion to separate the needed portion from the unneeded portion by using the tool supported by the tool supporting portion in a state in which a door that divides the processing space is opened for a workpiece material transport mechanism to move into the processing space and at least the needed portion of the workpiece obtained through machining in the first processing step is supported by the workpiece material transport mechanism.

### [Advantageous Effects of Invention]

According to the present invention, it is possible to provide a method for machining a component, with which it is possible to improve transport efficiency from a machine tool when a workpiece material is machined into a component in its final shape while leaving an excess portion that is a portion other than the component in its final shape.

### [Brief Description of Drawings]

- [FIG. 1]: FIG. 1 is an illustrative diagram illustrating a machine tool.
- [FIG. 2]: FIG. 2 is an illustrative diagram illustrating a workpiece stocker that in-cludes the machine tool and a robot.
- [FIG. 3]: FIG. 3 is an illustrative diagram illustrating a first processing step.
- [FIG. 4]: FIG. 4 is an illustrative diagram illustrating a second processing step.
- [FIG. 5]: FIGS. 5(a) and 5(b) are illustrative diagrams illustrating a recovering step.

### [Description of Embodiment]

### [Basic Embodiment]

Hereinafter, a basic embodiment of a method for machining a component according to the present invention will be described.

The method for machining a component has a first characteristic configuration in which the method includes: a first processing step of machining a workpiece material into a work-piece in which a needed portion is connected to an unneeded portion via a connecting portion by action of a tool supported by a tool supporting portion on the workpiece material supported by a workpiece material supporting portion in a processing space covered with a cover member; and a second processing step of cutting the connecting portion to separate the needed portion from the unneeded portion by using the tool supported by the tool supporting portion in a state in which a door that divides the processing space is opened for a workpiece material transport mechanism to move into the processing space and at least the needed portion of the work-piece obtained through machining in the first processing step is supported by the workpiece material transport mechanism.

In a first processing step, processing such as grinding is performed on a workpiece material by using the tool to process the workpiece material into a workpiece in which a needed portion that is a final component is connected to an unneeded portion that is a frame via a connecting portion. The configuration of the unneeded portion is not limited to a frame, and the unneeded portion may have any configuration as long as the needed portion is supported via the connecting portion.

A second processing step is performed after the first processing step. In the second processing step, a door that divides the processing space is opened for a workpiece material transport mechanism to move into the processing space from the opening of the door, and the connecting portion is cut to separate the needed portion from the unneeded portion in a state in which at least the needed portion is supported by the workpiece material transport mechanism. As the workpiece material transport mechanism, an articulated robot, a workpiece loader, or the like can be used.

The method for machining a component may have, in addition to the first characteristic configuration described above, a second characteristic configuration in which the second processing step is a step of cutting the connecting portion to separate the needed portion from the unneeded portion by using the tool supported by the tool supporting portion in a state in which at least the unneeded portion is supported by the workpiece material supporting portion. The unneeded portion is rigidly supported by the workpiece material supporting portion, and thus unnecessary vibrations do not occur in the workpiece material when cutting the connecting portion to separate the needed portion from the unneeded portion. Accordingly, it is possible to accurately cut the connecting portion to separate the needed portion from the unneeded portion.

The method for machining a component may have, in addition to the first or second characteristic configuration described above, a third characteristic configuration in which the second processing step is a step of cutting the connecting portion to separate the needed portion from the unneeded portion by using the tool supported by the tool supporting portion in a state in which both of the needed portion and the unneeded portion are supported by the workpiece material transport mechanism. Because both of the needed portion and the unneeded portion are rigidly fixed by the workpiece material transport mechanism, it is possible to accurately cut the connecting portion to separate the needed portion from the unneeded portion.

The method for machining a component may have, in addition to any one of the first to third characteristic configurations described above, a fourth characteristic configuration in which the method further includes a recovering step of recovering the needed portion separated from the unneeded portion in the second processing step into a workpiece stocker by using the workpiece material transport mechanism, and the recovering step is a step of removing both of the needed portion and the unneeded portion from the processing space in a state in which both of the needed portion and the unneeded portion are supported by the workpiece material transport mechanism, and then recovering the needed portion separated from the unneeded portion into the workpiece stocker by using the workpiece material transport mechanism.

The unneeded portion does not remain in the processing space. Accordingly, the effort of separately performing an operation of recovering the unneeded portion from the processing space at a later time is eliminated. In the recovering step, the needed portion separated from the unneeded portion is recovered into the workpiece stocker, and it is therefore unnecessary to perform, for example, an operation of manually selecting the needed portion from the unneeded portion.

The method for machining a component may have, in addition to the second characteristic configuration described above, a fifth characteristic configuration in which the method further includes a recovering step of recovering the needed portion separated from the unneeded portion in the second processing step into a workpiece stocker by using the workpiece material transport mechanism, and the recovering step is a step of removing the needed portion from the processing space in a state in which the needed portion is supported by the workpiece material transport mechanism so as to recover the needed portion into the workpiece stocker, and dropping the unneeded portion supported by the workpiece material supporting portion into an unneeded portion recovering unit that is provided in the processing space so as to recover the unneeded portion.

In the recovering step, the needed portion supported by the workpiece material transport mechanism is recovered into the workpiece stocker, and when the unneeded portion is released from the workpiece material supporting portion, the unneeded portion is dropped to the unneeded portion recovering unit and recovered. Accordingly, the unneeded portion is not accumulated in the processing space.

The method for machining a component may have, in addition to the second characteristic configuration described above, a sixth characteristic configuration in which the first step is a step of machining the workpiece material so as to form the connecting portion in a region in which the workpiece material supporting portion that supports the unneeded portion in the second processing step and the tool supporting portion that supports the tool do not interfere with each other.

If the tool supporting portion interferes with the workpiece material supporting portion, a problem occurs in the second step. For this reason, a connecting portion forming region in which the connecting portion is to be formed in the first step is adjusted in advance.

The method for machining a component may have, in addition to any one of the first to sixth characteristic configurations described above, a seventh characteristic configuration in which the second processing step is performed in a state in which an output of a mist collector is increased relative to that in the first processing step.

The processing space is covered with the cover member to prevent a coolant, which is ejected to the processing target portion or the like when the workpiece material is machined in the first processing step, from scattering into the surrounding space. However, in the second step, the door that divides the processing space is opened for the workpiece material transport mechanism to move into the processing space, and thus the mist caused from the coolant may scatter outside through the opening of the door. Even in such a situation, by increasing the output of the mist collector relative to that in the first processing step, the mist that scatters outside through the opening of the door caused by the coolant being ejected is effectively suppressed.

The method for machining a component may have, in addition to any one of the first to seventh characteristic configurations, an eighth characteristic configuration in which the second processing step is performed at a position at which swarf generated when cutting the connecting portion to separate the needed portion from the unneeded portion does not scatter outside through an opening formed as a result of the door being opened, or at a tool attached orientation.

It is possible to avoid a situation in which swarf generated when cutting the connecting portion to separate the needed portion from the unneeded portion in the second processing step scatters outside through the opening of the door.

### [Specific Embodiment]

Hereinafter, a specific embodiment of the method for machining a component according to the present invention will be described.

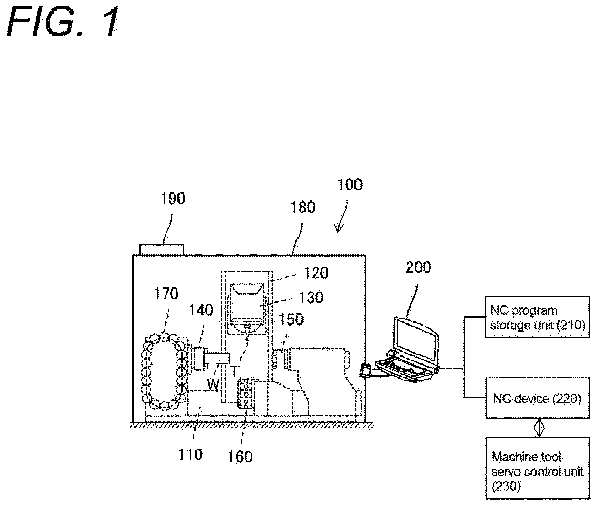

FIG. 1 shows an example of a machine tool to which the present invention is applied.

A machine tool 100 is configured as a 5-axis multi-processing machine that includes: a tool main spindle 130 that is movable in up-down and right-left directions along a column 120 provided on a bed 110; a first main spindle 140 that holds a workpiece; a second main spindle 150 that is provided at an opposing position to the first main spindle 140 and is movable in the right-left directions; a second tool post 160 that is provided at an opposing position to the tool main spindle 130 between the first main spindle 140 and the second main spindle 150 and is movable in the up-down and right-left directions; and a cover member 180 that covers a processing space formed by the constituent elements described above.

A tool magazine 170 is provided in front of the frame of the first main spindle 140. A tool T is selected from among the tools housed in the tool magazine 170, and attached to the tool main spindle 130 via an automatic tool exchange device (not shown).

A control panel 200 is provided outside the cover member 180. The control panel 200 is connected to an NC program storage unit 210, an NC device 220, and the like so as to be capable of performing communication with each other. The NC device 220 is connected to a machine tool servo control unit 230. The cover member 180 includes a door that is openable and closable.

The machine tool servo control unit 230 is driven by an NC program being executed by the NC device 220. The machine tool servo control unit 230 controls the tool main spindle 130 to move in the up-down and right-left directions, the second main spindle 150 to move in the right-left direction, and the second tool post 160 to move in the up-down and right-left directions. Also, the machine tool servo control unit 230 controls the tool T held by the tool main spindle 130, a tool held by the second tool post 160, as well as the first main spindle 140 and the second main spindle 150 to rotate.

A coolant nozzle (not shown) is provided near the tool main spindle 130, and ejects a coolant toward a processing target portion of a workpiece material W held by the first main spindle 140 or the second main spindle 150 during processing. A mist collector 190 for collecting the coolant in the form of mist flowing in the processing space together with the air is also provided.

The workpiece material (workpiece) W held by the first main spindle 140 is ground by the tool held by the tool main spindle 130 or the tool held by the second tool post 160, and then, the workpiece material W is transferred to and held by the second main spindle 150 and ground by the tool held by the tool main spindle 130 or the tool held by the second tool post 160. Alternatively, the workpiece material W may be ground by the tool held by the tool main spindle 130 or the tool held by the second tool post 160 in a state in which the workpiece material W is held by both of the first main spindle 140 and the second main spindle 150.

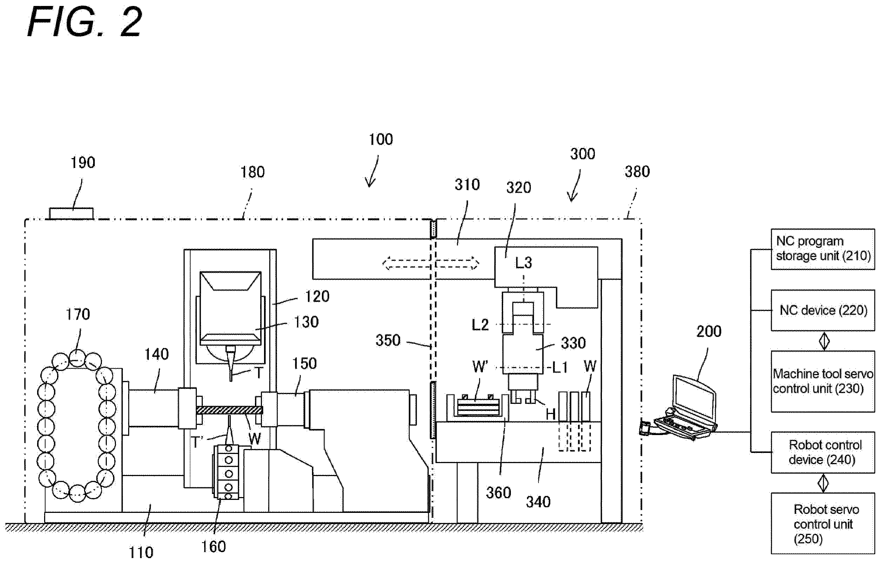

FIG. 2 shows a state in which a workpiece stocker 300 is provided on the right side adjacent to the machine tool 100. The workpiece stocker 300 includes: a cover member 380 that is provided to surround the workpiece stocker 300 for the purpose of safety management; and a workpiece mounting table 340 that houses pieces of workpiece material W before machining and workpieces W' after machining. The control panel 200 is connected to a robot control device 240 and a robot servo control unit 250.

Also, the workpiece stocker 300 includes: an articulated robot 330 with a hand H for sandwiching the workpiece material W attached to a leading end thereof; and a supporting portion 320 for supporting the articulated robot 330 that is attached to a horizontal guide plate 310 so as to be movable in the horizontal direction as indicated by the arrow along the horizontal guide plate 310. In FIG. 2, dash-dotted lines indicated by reference signs L1, L2, and L3 show rotation axes. The articulated robot 330 functions as a workpiece material transport mechanism.

A door 350 for separating the processing space is provided in a wall portion where the cover member 180 of the machine tool 100 and the cover member 380 of the workpiece stocker 300 oppose each other. The door 350 is opened when a work-piece material W is transported into the machine tool 100 and when a workpiece W' is transported from the machine tool 100, and is closed while the workpiece material W is processed by the machine tool 100.

The operation of opening and closing the door 350 and the operation of the articulated robot 330 are driven by the robot servo control unit 250 that is servo-controlled by the robot control device 230 that executes an NC program stored in the NC program storage unit 210.

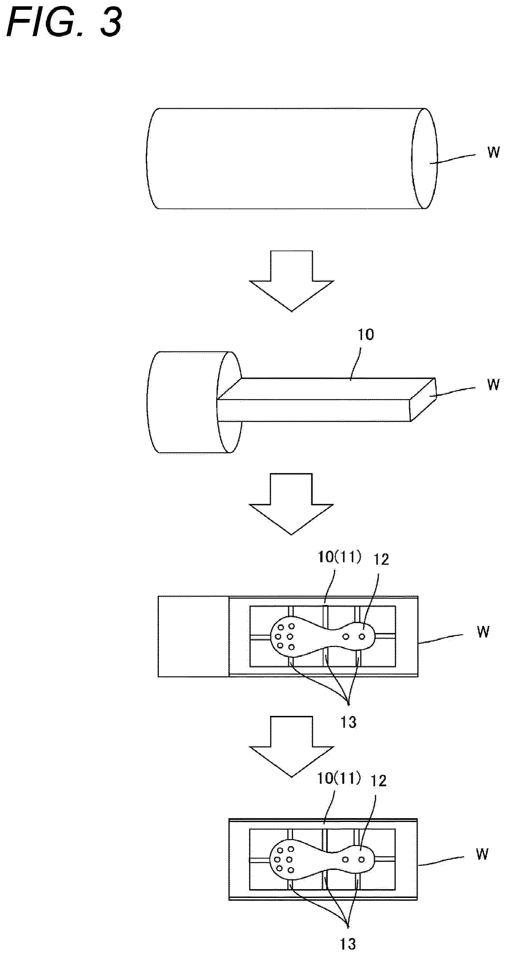

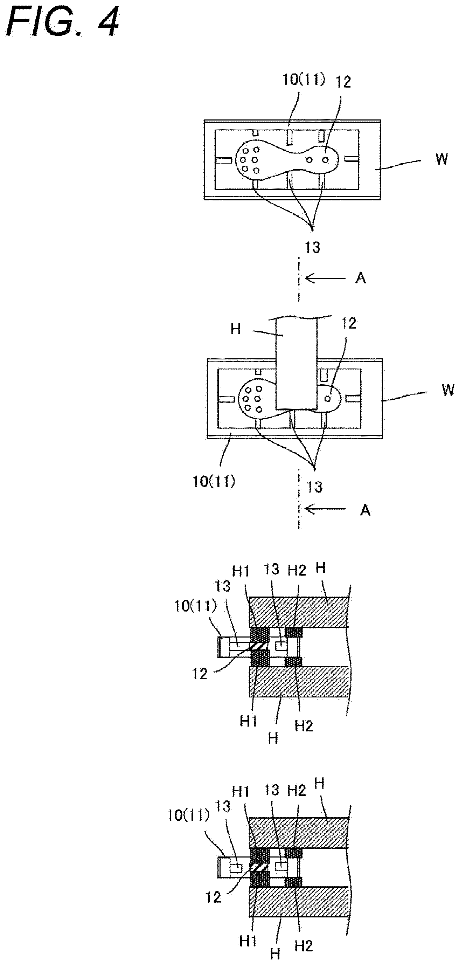

FIG. 3 shows a first processing step, and FIG. 4 shows a second processing step. In the first processing step, after the door 350 is opened, one piece of workpiece material W, which is a cylindrical metal mass stored in the workpiece stocker 300, is held by the hand H of the articulated robot 330, and a left end portion of the workpiece material W is held by the first main spindle 140 (see the top diagram in FIG. 3). After that, the articulated robot 330 moves back into the workpiece stocker 300, and the door 350 is closed.

Next, the workpiece material W is formed into a flat plate 10 (see the second diagram in FIG. 3) by being ground by the tool T attached to the tool main spindle 130 to have a flat surface, and then also ground in the same manner to have a flat surface after the first main spindle 140 is rotated by 180 degrees. At this time, a coolant is ejected and supplied to the processing target portion from the coolant nozzle.

Then, the flat plate 10 is processed by the tool T attached to the tool main spindle 130 or the tool T' attached to the second tool post 160 into a workpiece in which a needed portion 12 in the form of a spatula, which is a final component, is connected to an unneeded portion 11 in the form of a frame via a plurality of connecting portions 13 (see the third diagram (a plan view) in FIG. 3).

Furthermore, a right end portion of the workpiece material W is held by the second main spindle 150, and the left end portion of the workpiece material W had been held by the first main spindle 140 is cut (see the bottom diagram in FIG. 3). In this state, the workpiece material W is held by the second main spindle 150.

In the second processing step, in a state in which the workpiece material W is held by the second main spindle 150, a few of the connecting portions 13 that are provided on a side of the workpiece material W that is sandwiched by the hand H are cut at an edge portion of the needed portion 12 by the tool T attached to the tool main spindle 130 or the tool T' attached to the second tool post 160 (see the top diagram in FIG. 4). After that, the door 350 is opened, and the articulated robot 330 moves into the processing space from the workpiece stocker 300.

In this state, both of the needed portion 12 and the unneeded portion 11 are sandwiched from above and below by the hand H of the articulated robot 330 (see the second diagram in FIG. 4). A cross-section taken along the line A-A in the second diagram in FIG. 4 is shown in the third diagram in FIG. 4.

Furthermore, in this state, the remaining connecting portions 13 are cut at the edge portion of the needed portion 12 by the tool T attached to the tool main spindle 130 or the tool T' attached to the second tool post 160 (see the bottom diagram in FIG. 4). At this time, a coolant is ejected and supplied from the coolant nozzle. Here, by performing control to increase the output of the mist collector, or in other words, the output of an intake fan included in the mist collector relative to that in the first processing step, mist that scatters from the opening of the door 350 toward the workpiece stocker 300 caused by the coolant being ejected is effectively suppressed. The above-described control is performed by the machine tool servo control unit 230.

Abutting pieces H1 and H2 are provided on opposing surfaces of a pair of claw portions of the hand H. When the connecting portions 13 are cut in a state in which the workpiece material W is sandwiched by the hand, a displacement may occur in the workpiece material W sandwiched by the hand due to a counter force that acts on the workpiece material W. For this reason, at least a sandwiching force for sandwiching the needed portion 12 is required to be stronger than a predetermined level. Accordingly, as the abutting pieces H1 for the needed portion 12, elastic members that have a high level of hardness are used. Conversely, by reducing the sandwiching force for sandwiching the needed portion 12, the counter force that acts on the workpiece material W when the connecting portions 13 are cut can be absorbed by the unneeded portion 11. For this reason, the abutting pieces H2 for the unneeded portion 11 are made by using a material that has a level of hardness lower than that of the material of the abutting pieces H1.

As the positions of the plurality of connecting portions 13 formed in the first step, the workpiece material W is machined so as to form the connecting portions 13 in a region in which a workpiece material supporting portion that supports the unneeded portion 11 in the second processing step, or in other words, a workpiece holding portion included in the second main spindle 150 and a tool supporting portion of the second tool post 160 that supports the tool T' do not interfere with each other. The reason is that, if the connecting portions 13 are formed at positions at which the second tool post 160 comes into contact with the second main spindle 150 at the time of cutting the connecting portions 13, the processing cannot be performed.

When the second processing step ends, a recovering step is performed, and both of the unneeded portion 11 and the needed portion 12 separated from the unneeded portion 11 in the second processing step are recovered into the workpiece stocker 300 by the articulated robot 330.

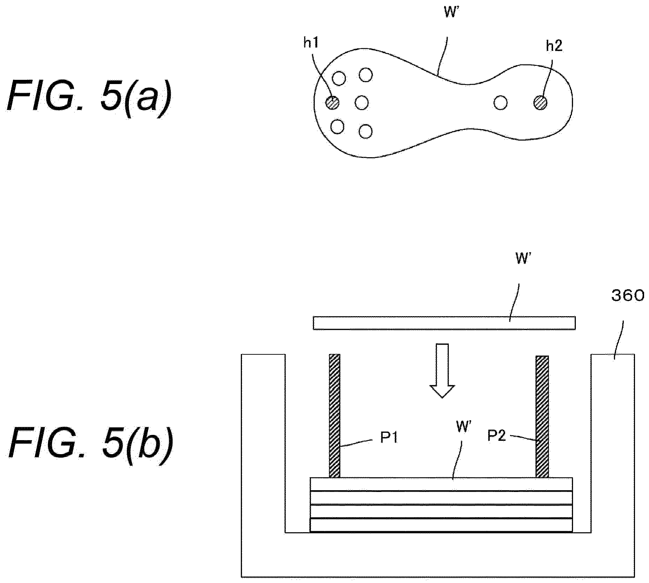

At this time, the final component W' that is the needed portion 12 is selectively placed in a component holding unit 360 so as to separate from the unneeded portion. FIG. 5(a) is a plan view of the final component W', and FIG. 5(b) is a side view of the component holding unit 360. The component holding unit 360 includes: a holding unit that has a rectangular U-shape in a side view; and two guide pillars P1 and P2 that are provided upright on the holding unit. The final component W' held by the hand H is transported to a position above the component holding unit 360, moved down such that through holes h1 and h2 (hatched portions in FIG. 5(a)) formed in the final component W' are fitted to the guide pillars P1 and P2, and then detached from the hand H. In this way, the final component W' is placed in order and recovered in the component holding unit 360.

In the recovering step described above, an example has been described in which both of the needed portion 12 and the unneeded portion 11 are recovered into the workpiece stocker 300. However, in a state in which the unneeded portion 11 is supported by the workpiece holding portion of the second main spindle 150, only the needed portion 12 may be removed from the processing space while the needed portion 12 is supported by the articulated robot 330, and recovered into the workpiece stocker 300. In this case, the workpiece holding portion of the second main spindle 150 may be thereafter released to drop the unneeded portion 11 into an unneeded portion recovering unit that is provided below the second main spindle 150 so as to recover the unneeded portion 11.

In the embodiment given above, an example has been described in which the work-piece stocker 300 is continuously connected to a right side portion of the processing space. However, the connecting position of the workpiece stocker 300 is not limited thereto. For example, the door formed in the front portion of the cover member 180 may be opened, and a movable workpiece stocker 300 may be disposed in front of the processing space.

In the embodiment given above, an example has been described in which a 5-axis multi-processing machine is used as the machine tool 100. However, as the machine tool to which the present invention can be applied, the present invention is also applicable to a machine tool 100 other than a 5-axis multi-processing machine such as a lathe or a machining center.

The embodiments and aspects of the present invention have been described above. However, the configuration details disclosed herein may be changed. The combinations, the orders, and the like of elements in the embodiments and aspects of the present invention may be changed without departing from the scope and spirit of the claimed invention.

### [Industrial Applicability]

As described above, it is possible to implement a method for machining a component, with which it is possible to improve transport efficiency from a machine tool when a work-piece material is machined into a component in its final shape while leaving an excess portion that is a portion other than the component in its final shape.

### [Reference Signs List]

- 10: flat plate
- 11: unneeded portion
- 12: needed portion
- 13: connecting portion
- 100: machine tool
- 130: tool main spindle
- 140: first main spindle
- 150: second main spindle
- 160: second tool post (turret)
- 180: cover member
- 190: mist collector
- 200: control panel
- 210: NC program storage unit
- 220: NC device
- 230: machine tool servo control unit
- 240: robot control unit
- 250: robot servo control unit
- 300: workpiece stocker
- 310: horizontal guide plate
- 320: supporting portion
- 330: articulated robot
- 340: workpiece mounting table
- 350: door
- 360: component holding unit
- T, T': tool
- W, W': workpiece material

## Claims

1. A method for machining a component comprising:
a first processing step of machining a workpiece material into a workpiece in which a needed portion is connected to an unneeded portion via a connecting portion by action of a tool supported by a tool supporting portion on the work-piece material supported by a workpiece material supporting portion in a processing space covered with a cover member; and
a second processing step of cutting the connecting portion to separate the needed portion from the unneeded portion by using the tool supported by the tool supporting portion in a state in which a door that divides the processing space is opened for a workpiece material transport mechanism to move into the processing space and at least the needed portion of the workpiece obtained through machining in the first processing step is supported by the work-piece material transport mechanism.

2. The method for machining a component in accordance with claim 1,
wherein the second processing step is a step of cutting the connecting portion to separate the needed portion from the unneeded portion by using the tool supported by the tool supporting portion in a state in which at least the unneeded portion is supported by the workpiece material supporting portion.

3. The method for machining a component in accordance with claim 1 or 2,
wherein the second processing step is a step of cutting the connecting portion to separate the needed portion from the unneeded portion by using the tool supported by the tool supporting portion in a state in which both of the needed portion and the unneeded portion are supported by the workpiece material transport mechanism.

4. The method for machining a component in accordance with any one of claims 1 to 3, further comprising:
a recovering step of recovering the needed portion separated from the unneeded portion in the second processing step into a workpiece stocker by using the workpiece material transport mechanism,
wherein the recovering step is a step of removing both of the needed portion and the unneeded portion from the processing space in a state in which both of the needed portion and the unneeded portion are supported by the work-piece material transport mechanism, and then recovering the needed portion separated from the unneeded portion into the workpiece stocker by using the workpiece material transport mechanism.

5. The method for machining a component in accordance with claim 2, further comprising:
a recovering step of recovering the needed portion separated from the unneeded portion in the second processing step into a workpiece stocker by using the workpiece material transport mechanism,
wherein the recovering step is a step of removing the needed portion from the processing space in a state in which the needed portion is supported by the workpiece material transport mechanism so as to recover the needed portion into the workpiece stocker, and dropping the unneeded portion supported by the workpiece material supporting portion into an unneeded portion recovering unit that is provided in the processing space so as to recover the unneeded portion.

6. The method for machining a component in accordance with claim 2,
wherein the first step is a step of machining the workpiece material so as to form the connecting portion in a region in which the workpiece material supporting portion that supports the unneeded portion in the second processing step and the tool supporting portion that supports the tool do not interfere with each other.

7. The method for machining a component in accordance with any one of claims 1 to 6,
wherein the second processing step is performed in a state in which an output of a mist collector is increased relative to that in the first processing step.

8. The method for machining a component in accordance with any one of claims 1 to 7,
wherein the second processing step is performed at a position at which swarf generated when cutting the connecting portion to separate the needed portion from the unneeded portion does not scatter outside through an opening formed as a result of the door being opened, or at a tool attached orientation.
